# DEMANDE DE BREVET EUROPEEN

(11) **EP 1 870 589 A1**
(43) Date de publication de la demande: **26.12.2007**
(21) Numéro de dépôt: 07109618.4
(22) Date de dépôt: 05.06.2007
(51) Int. Cl.: F02K 1/48, F02K 1/38

(54) **Mélangeur à lobes courbes pour tuyère à flux confluents de turbomachine**

(30) Priorité: 19.06.2006 FR 0652536
(71) Demandeur: SNECMA, 75015 Paris (FR)
(72) Inventeur: Loheac, Pierre, Philippe, Marie, 77170, Brie Comte Robert (FR); Vuillemin, Alexandre, Alfred, Gaston, 75011, Paris (FR)
(74) Mandataire: Boura, Olivier

(57) **Abrégé**

L'invention concerne un mélangeur (22) de turbomachine à double flux, comportant un organe cylindrique ayant à son extrémité aval une partie sinusoïdale définissant des lobes intérieurs (26) et des lobes extérieurs (28) répartis sur la circonférence, les lobes extérieurs (28) comportant chacun une paire de parois radiales (34a, 34b) reliées entre elles par un dôme curviligne extérieur (36), les lobes intérieurs (26) comportant chacun une paire de parois radiales (30) reliées entre elles par un dôme curviligne intérieur (32), les parois (34a, 34b) des lobes extérieurs étant disposées dans le prolongement radial des parois (30) des lobes intérieurs, les parois radiales (34a, 34b, 30) des lobes extérieurs (28) et des lobes intérieurs (26) présentant un contour sensiblement courbe ayant au moins un point d'inflexion (38a, 38b).

## Description

### Arrière-plan de l'invention

La présente invention se rapporte au domaine général des mélangeurs destinés au mélange de flux gazeux concentriques d'une turbomachine à double flux. Elle vise plus particulièrement un mélangeur de type marguerite pour tuyère à flux confluents.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de tuyère est le bruit prédominant lors de la phase de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une tuyère à flux confluents de turbomachine se compose d'un capot primaire centré sur l'axe longitudinal de la turbomachine, d'un capot secondaire disposé concentriquement autour du capot primaire de façon à définir un premier canal annulaire pour l'écoulement d'un flux extérieur (ou flux froid), et d'un corps central disposé concentriquement à l'intérieur du capot primaire de façon à définir un second canal annulaire pour l'écoulement d'un flux intérieur (ou flux chaud), le capot secondaire s'étendant au-delà du capot primaire.

Généralement, une tuyère à flux confluents comporte en outre un mélangeur qui est monté à l'extrémité aval du capot primaire. Un tel mélangeur est destiné à réduire le bruit de jet en sortie de la tuyère en forçant le mélange entre le flux froid et le flux chaud avant leur éjection. Il est en effet bien connu que des gains acoustiques sont obtenus en augmentant le mélange entre le flux froid et le flux chaud issus de la turbomachine.

Parmi les mélangeurs pour tuyère à flux confluents, on connaît en particulier le mélangeur de type marguerite qui se présente sous la forme d'une partie sensiblement sinusoïdale définissant des lobes intérieurs et des lobes extérieurs répartis sur toute la circonférence du capot primaire de la tuyère. On se réfèrera par exemple aux brevets US 4,077,206 et US 4,117,671.

Avec un mélangeur de type marguerite, les lobes intérieurs forment des goulottes guidant radialement le flux froid vers le second canal dans lequel circule le flux chaud, et les lobes extérieurs forment d'autres goulottes guidant radialement le flux chaud vers le premier canal dans lequel s'écoule le flux froid. Ainsi, à la sortie du mélangeur, le flux froid et le flux chaud se mélangent par cisaillement selon une direction qui est essentiellement radiale. Ce mélange permet de générer des tourbillons dont l'axe de rotation est globalement axial et dont l'intensité dépend principalement des conditions d'éjection des flux (taux de dilution de la turbomachine, cisaillement entre les flux froid et chaud) et des conditions d'alimentation du fond des lobes du mélangeur.

Or, pour des conditions d'éjection des flux et d'alimentation du fond des lobes qui ne sont pas optimisées, l'intensité des tourbillons générés par un mélangeur de type marguerite n'est pas suffisante pour obtenir un mélange efficace entre le flux froid et le flux chaud, ce qui limite la réduction des niveaux de bruit de jet obtenue lors des phases de décollage de l'avion.

### Objet et résumé de l'invention

La présente invention a donc pour but principal de pallier de tels inconvénients en proposant un mélangeur de type marguerite permettant d'améliorer le mélange entre le flux froid et le flux chaud afin de réduire les nuisances acoustiques de la turbomachine.

Ce but est atteint grâce à un mélangeur destiné au mélange de flux gazeux concentriques intérieur et extérieur dans une turbomachine à double flux, le mélangeur comportant un organe sensiblement cylindrique ayant à son extrémité aval une partie sensiblement sinusoïdale définissant des lobes intérieurs et des lobes extérieurs répartis sur la circonférence, les lobes extérieurs comportant chacun une paire de parois radiales reliées entre elles par un dôme curviligne extérieur de façon à former une goulotte extérieure guidant radialement le flux gazeux intérieur vers l'extérieur, les lobes intérieurs comportant chacun une paire de parois radiales reliées entre elles par un dôme curviligne intérieur de façon à former une goulotte intérieure guidant radialement le flux gazeux extérieur vers l'intérieur, les parois des lobes extérieurs étant disposées dans le prolongement radial des parois des lobes intérieurs, et dans lequel, conformément à l'invention, les parois radiales des lobes extérieurs et des lobes intérieurs présentent un contour sensiblement courbe ayant au moins un point d'inflexion.

L'utilisation de parois radiales qui ont un contour courbe avec au moins un point d'inflexion permet de créer un mélange entre ces flux selon une direction sensiblement circonférentielle. Créer un tel mélange azimutal permet de renforcer les caractéristiques aérodynamiques des tourbillons générés par le cisaillement radial entre les flux et ainsi de réduire significativement les niveaux de bruit de jet de la tuyère quelles que soient les conditions d'éjection des flux et d'alimentation du fond des lobes.

Les points d'inflexion du contour courbe des parois radiales des lobes peuvent être situés radialement à sensiblement égale distance des dômes extérieurs et intérieurs des lobes respectifs.

Les tangentes respectives des points d'inflexion du contour courbe des parois radiales des lobes forment chacune un angle avec un plan radial passant à la fois par le point d'inflexion considéré et par l'axe de révolution de l'organe cylindrique qui est de préférence supérieur à 0° et inférieur ou égal à 45°.

Chaque lobe du mélangeur peut être symétrique par rapport à un plan radial médian au lobe concerné.

L'invention a également pour objet une tuyère à flux confluents de turbomachine comportant un mélangeur tel que défini précédemment.

L'invention a encore pour objet une turbomachine comportant une tuyère à flux confluents équipée d'un mélangeur tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective et en écorché d'une tuyère à flux confluents équipée d'un mélangeur selon l'invention ;
- la figure 2 est une vue en coupe de la figure 1 selon un plan radial perpendiculaire à l'axe longitudinal de la tuyère ; et
- la figure 3 est une vue agrandie de lobes du mélangeur selon la vue en coupe de la figure 2.

### Description détaillée d'un mode de réalisation

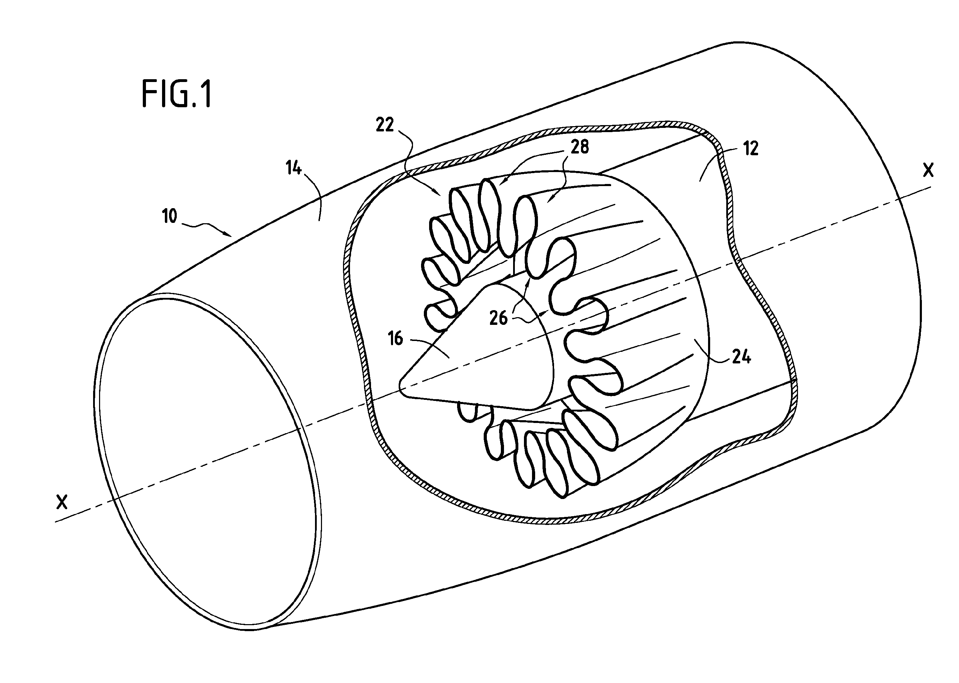

La figure 1 représente schématiquement en perspective et en écorché une tuyère 10 à flux confluents de turbomachine à double flux.

La tuyère 10, de forme axisymétrique par rapport à son axe longitudinal X-X, est typiquement formée d'un capot primaire 12, d'un capot secondaire 14 et d'un corps central 16 qui sont centrés sur l'axe longitudinal X-X de la tuyère.

Le capot primaire 12, de forme sensiblement cylindrique, s'étend selon l'axe longitudinal X-X de la tuyère. Le corps central 16 est disposé concentriquement à l'intérieur du capot primaire 12 et se termine par une partie sensiblement conique.

Le capot secondaire 14, également de forme sensiblement cylindrique, entoure le capot primaire 12 tout en lui étant concentrique et s'étend également selon l'axe longitudinal X-X de la tuyère. Le capot secondaire 14 s'étend longitudinalement vers l'aval au-delà du capot primaire 12.

On notera que, sur l'exemple de réalisation de la figure 1, le corps central 16 de la tuyère 10 est de type externe, c'est à dire que le corps central s'étend longitudinalement au-delà du bord de fuite du capot primaire 12.

Toutefois, l'invention peut également s'appliquer à une tuyère à flux confluents de type interne dans laquelle le bord de fuite du capot primaire s'étend longitudinalement au-delà du corps central de façon à recouvrir complètement ce dernier.

Dans la description qui suit, les termes « intérieur » et « extérieur » désignent un élément du mélangeur ou de la tuyère respectivement proche ou éloignée de l'axe longitudinal X-X de la tuyère.

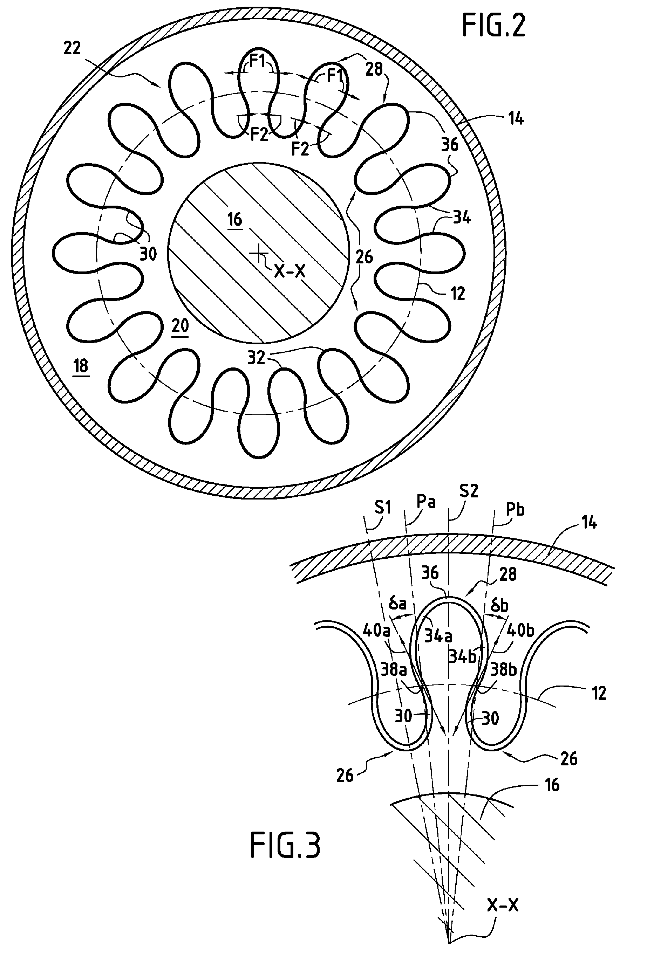

Comme représenté sur la figure 2, l'assemblage concentrique des éléments de la tuyère 10 permet de définir, d'une part entre les capots primaire 12 et secondaire 14, un premier canal annulaire 18 pour l'écoulement d'un flux gazeux extérieur issu de la turbomachine et appelé flux secondaire ou flux froid, et d'autre part, entre le capot primaire 12 et le corps central 16, un second canal annulaire 20 pour l'écoulement d'un flux gazeux intérieur issu de la turbomachine et appelé flux primaire ou flux chaud.

Les flux primaire et secondaire s'écoulant dans ces deux canaux annulaires 18, 20 se mélangent entre eux au niveau d'un mélangeur 22 fixé à l'extrémité aval du capot primaire 12.

Le mélangeur 22 selon l'invention est du type marguerite. Il comporte un organe 24 sensiblement cylindrique ayant à son extrémité aval une partie sensiblement sinusoïdale définissant des lobes intérieurs 26 et des lobes extérieurs 28.

Les lobes intérieurs 26 et des lobes extérieurs 28 du mélangeur sont disposés en alternance les uns par rapport aux autres et peuvent être répartis de façon régulière sur toute la circonférence de l'organe cylindrique 24.

Comme représenté sur la figure 2, les lobes intérieurs 26 font saillies radialement vers l'intérieur du capot primaire 12, c'est-à-dire qu'ils pénètrent dans le second canal 20 d'écoulement du flux chaud, tandis que les lobes extérieurs 28 font saillies radialement vers l'extérieur du capot primaire 12, c'est-à-dire qu'ils pénètrent dans le premier canal 18 d'écoulement du flux froid.

Par ailleurs, comme représenté sur la figure 1, les lobes 26, 28 du mélangeur s'étendent tous sur une même distance longitudinale. Toutefois, l'invention s'applique également aux mélangeurs dont les lobes ont des longueurs différentes (dans le sens longitudinal).

De façon plus précise, les lobes intérieurs 26 sont formés chacun par une paire de parois 30 qui s'étendent selon une direction radiale, sont espacées l'une de l'autre dans le sens circonférentiel et sont reliées entre elles vers l'intérieur par un dôme (ou arche) curviligne intérieur 32.

De la même manière, les lobes extérieurs 28 sont formés chacun par une paire de parois 34 (aussi référencées 34a, 34b dans la description) qui s'étendent selon une direction sensiblement radiale, sont espacées l'une de l'autre dans le sens circonférentiel et sont reliées entre elles vers l'extérieur par un dôme curviligne intérieur 36.

Il est à noter que les parois radiales 34 d'un même lobe extérieur 28 sont disposées dans le prolongement radial des parois radiales 30 des deux lobes intérieurs 26 qui lui sont directement adjacents (et réciproquement).

Ainsi, les lobes intérieurs 26 forment chacun une goulotte (ou conduit) intérieure permettant de guider vers l'intérieur le flux froid s'écoulant dans le premier canal 18 de la tuyère, c'est-à-dire que le flux froid empruntant de telles goulottes intérieures est dirigé radialement vers l'axe longitudinal X-X de la tuyère pour se mélanger au flux chaud circulant dans le second canal 20 de la tuyère.

De même, les lobes extérieurs 28 forment chacun une goulotte (ou conduit) extérieure par laquelle le flux chaud s'écoulant dans le second canal 20 de la tuyère est guidé radialement vers l'extérieur, c'est-à-dire que le flux chaud empruntant de telles goulottes extérieures est dirigé en direction du premier canal 18 de la tuyère pour se mélanger au flux froid y circulant.

De la sorte, un mélange s'effectue entre le flux froid s'écoulant dans le premier canal 18 et le flux chaud s'écoulant dans le second canal 20. Ce mélange, qui a notamment pour but de réduire le bruit de jet de la tuyère, s'effectue selon une direction globalement radiale. Ceci est dû à la géométrie particulière du mélangeur avec ses lobes qui pénètrent radialement dans les canaux d'écoulements respectifs des flux froid et chaud.

Selon l'invention, chaque paroi radiale 30, 34 des lobes intérieurs 26 et extérieurs 28 présente un contour sensiblement courbe ayant au moins un point d'inflexion.

Cette caractéristique est plus particulièrement visible sur les figures 2 et 3 qui représentent le mélangeur 22 selon une vue en coupe selon un plan radial perpendiculaire à l'axe longitudinal X-X de la tuyère.

Sur la figure 3, si l'on prend par exemple un lobe extérieur 28 et l'un des deux lobes intérieurs 26 qui lui sont adjacents, on constate bien que les parois radiales 34a, 30 de ces lobes qui sont situées dans le prolongement radial l'une de l'autre présentent un contour en forme de courbe avec un point d'inflexion 38a.

En partant du même lobe extérieur 28, on remarque également que son autre paroi radiale 34b et la paroi radiale 30 de l'autre lobe intérieur 26 qui lui est adjacent (ces parois 30, 34b sont situés dans le prolongement l'une de l'autre) ont aussi un contour en forme de courbe avec un point d'inflexion 38b.

Par « point d'inflexion » 38a, 38b, on entend un point régulier du contour de parois radiales des lobes intérieurs et extérieurs où ce contour traverse sa tangente 40a, 40b.

Les points d'inflexion 38a, 38b du contour courbe des parois radiales des lobes peuvent être situés radialement à sensiblement égale distance des dômes extérieurs 36 et intérieurs 32 des lobes extérieurs 28 et intérieurs 26 respectifs.

Par ailleurs, ces points d'inflexion 38a, 38b peuvent être situés dans le prolongement longitudinal de l'extrémité aval du capot primaire 12 de la tuyère. Il résulte de ces dispositions que la pénétration radiale des lobes intérieurs 26 dans le flux chaud est sensiblement identique à la pénétration radiale des lobes extérieurs 28 dans le flux froid.

Les tangentes 40a, 40b respectives des points d'inflexion 38a, 38b des parois radiales des lobes 26, 28 forment chacune un angle δa, δb avec un plan radial Pa, Pb passant à la fois par le point d'inflexion concerné et par l'axe de révolution de l'organe cylindrique 24 du mélangeur (cet axe est confondu avec l'axe longitudinal X-X de la tuyère). De préférence, cet angle δa, δb est supérieur à 0° et inférieur ou égal à 45°.

Comme représenté à la figure 3, chaque lobe 26, 28 du mélangeur peut être symétrique par rapport à un plan radial médian au lobe concerné (une disposition dissymétrique est toutefois envisageable).

Ainsi, sur l'exemple de la figure 3, chaque lobe intérieur 26 est symétrique par rapport à un plan radial S1 médian au lobe, et chaque lobe extérieur 28 est symétrique par rapport à un plan radial S2 médian au lobe.

Il résulte d'une telle symétrie particulière des lobes 26, 28 que les contours des parois radiales d'un même lobe sont symétriques par rapport à ce plan médian S1, S2, et que les angles δa, δb que forment les tangentes 40a, 40b respectives des points d'inflexion 38a, 38b sont identiques (en valeur absolue).

Le profil des parois radiales 30 des lobes intérieurs 26 est ainsi bombé selon une direction essentiellement circonférentielle vers le flux intérieur s'écoulant dans le premier canal 18 de la tuyère. De même, le profil des parois radiales 34 des lobes extérieurs 28 est bombé selon une direction essentiellement circonférentielle vers le flux extérieur s'écoulant dans le second canal 20 de la tuyère.

Le profil bombé des parois radiales des lobes permet de créer un mélange selon une direction sensiblement circonférentielle entre le flux chaud et le flux froid.

En effet, comme représenté sur la figure 2, le profil des parois radiales de chaque lobe extérieur 28 génère un écoulement selon une direction circonférentielle du flux chaud circulant dans la goulotte extérieure définie par ce lobe extérieur. Cet écoulement circonférentiel (ou azimutal) est schématisé par les flèches F1 sur cette figure 2. Il est dirigé, pour chaque lobe extérieur, vers les deux lobes extérieurs qui lui sont adjacents.

De même, le profil des parois radiales de chaque lobe intérieur 26 génère un écoulement selon une direction circonférentielle du flux froid circulant dans la goulotte intérieure définie par ce lobe intérieur. Cet écoulement circonférentiel (ou azimutal) est schématisé par les flèches F2. Il est de sens opposé à celui généré par les parois radiales des lobes extérieurs 28, c'est à dire qu'il est dirigé, pour chaque lobe intérieur, vers les deux lobes intérieurs qui lui sont adjacents.

Bien entendu, ces écoulements azimutaux F1 et F2 s'ajoutent aux écoulements principaux des flux gazeux circulant radialement dans les goulottes extérieures et intérieures définies respectivement par les lobes extérieurs et intérieurs du mélangeur.

Ainsi, le flux froid s'écoulant dans le premier canal 18 de la tuyère est guidé principalement selon une direction radiale vers l'intérieur lorsqu'il emprunte les lobes intérieurs 26 et, à l'extrémité aval de ces lobes, une partie de ce flux est dirigé selon une direction circonférentielle dans le flux chaud par le contour bombé des parois radiales des lobes. En outre, le flux chaud s'écoulant dans le second canal 18 de la tuyère est guidé principalement selon une direction radiale vers l'extérieur lorsqu'il emprunte les lobes extérieurs 28 et, à l'extrémité aval de ces lobes, une partie de ce flux est dirigé selon une direction circonférentielle dans le flux froid par le contour bombé des parois radiales des lobes.

Il en résulte qu'au cisaillement principal flux froid / flux chaud s'effectuant selon une direction globalement radiale, s'ajoute un cisaillement secondaire entre ces flux selon une direction circonférentielle qui permet de renforcer le mélange entre les flux et, par conséquent, d'améliorer l'efficacité acoustique du dispositif.

On notera que plus les angles δa, δb que forment les tangentes 40a, 40b respectives des points d'inflexion 38a, 38b des parois radiales des lobes sont élevés, plus le mélange circonférentiel entre le flux froid et le flux chaud est important.

## Revendications

1. Mélangeur (22) destiné au mélange de flux gazeux concentriques intérieur et extérieur dans une turbomachine à double flux, le mélangeur comportant un organe (24) sensiblement cylindrique ayant à son extrémité aval une partie sensiblement sinusoïdale définissant des lobes intérieurs (26) et des lobes extérieurs (28) répartis sur la circonférence, les lobes extérieurs (28) comportant chacun une paire de parois radiales (34) reliées entre elles par un dôme curviligne extérieur (36) de façon à former une goulotte extérieure guidant radialement le flux gazeux intérieur vers l'extérieur, les lobes intérieurs (26) comportant chacun une paire de parois radiales (30) reliées entre elles par un dôme curviligne intérieur (32) de façon à former une goulotte intérieure guidant radialement le flux gazeux extérieur vers l'intérieur, les parois (34) des lobes extérieurs étant disposées dans le prolongement radial des parois (30) des lobes intérieurs, **caractérisé en ce que** les parois radiales (34, 30) des lobes extérieurs (28) et des lobes intérieurs (26) présentent un contour sensiblement courbe ayant au moins un point d'inflexion (38a, 38b).

2. Mélangeur selon la revendication 1, dans lequel les points d'inflexion (38a, 38b) du contour courbe des parois radiales (30, 34) des lobes (26, 28) sont situés radialement à sensiblement égale distance des dômes extérieurs (36) et intérieurs (32) desdits lobes respectifs.

3. Mélangeur selon l'une des revendications 1 et 2, dans lequel les tangentes (40a, 40b) respectives des points d'inflexion (38a, 38b) du contour courbe des parois radiales (30, 34) des lobes (26, 28) forment chacune un angle (δa, δb) avec un plan radial (Pa, Pb) passant à la fois par le point d'inflexion considéré et par l'axe de révolution de l'organe cylindrique (24) qui est supérieur à 0° et inférieur ou égal à 45°.

4. Mélangeur selon l'une quelconque des revendications 1 à 3, dans laquelle chaque lobe (26, 28) est symétrique par rapport à un plan radial (S1, S2) médian au lobe concerné.

5. Tuyère à flux confluents de turbomachine, **caractérisée en ce qu'**elle comporte un mélangeur (22) selon l'une quelconque des revendications 1 à 4.

6. Turbomachine comportant une tuyère à flux confluents équipée d'un mélangeur (22) selon l'une quelconque des revendications 1 à 4.
